(19) **Europäisches Patentamt European Patent Office Office européen des brevets**

(11) **EP 3 037 567 B1**

(12) **EUROPEAN PATENT SPECIFICATION**

(45) Date of publication and mention of the grant of the patent:
**18.09.2019 Bulletin 2019/38**

(51) Int Cl.:
*C21D 6/00* *(2006.01)*  *C21D 8/02* *(2006.01)*
*C21D 1/02* *(2006.01)*  *B32B 15/01* *(2006.01)*
*C22C 38/00* *(2006.01)*  *C22C 38/58* *(2006.01)*
*C22C 38/02* *(2006.01)*  *C22C 38/04* *(2006.01)*
*C22C 38/12* *(2006.01)*  *C22C 38/14* *(2006.01)*
*C22C 38/44* *(2006.01)*  *C22C 38/40* *(2006.01)*
*B21B 1/38* *(2006.01)*

(21) Application number: **14855418.1**

(22) Date of filing: **17.10.2014**

(86) International application number:
**PCT/JP2014/005290**

(87) International publication number:
**WO 2015/059909 (30.04.2015 Gazette 2015/17)**

(54) **AUSTENITIC STAINLESS STEEL CLAD STEEL PLATE AND PROCESS FOR MANUFACTURING SAME**

MIT AUSTENITISCHEM ROSTFREIEM STAHL PLATTIERTES BLECH UND VERFAHREN ZUR HERSTELLUNG DAVON

ACIER INOXYDABLE AUSTÉNITIQUE POUR UNE TÔLE PLAQUÉE ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.10.2013 JP 2013217950**

(43) Date of publication of application:
**29.06.2016 Bulletin 2016/26**

(73) Proprietor: **JFE Steel Corporation**
**Tokyo 100-0011 (JP)**

(72) Inventors:
• **YOKOTA, Tomoyuki**
 **Tokyo 100-0011 (JP)**
• **TACHIBANA, Shunichi**
 **Tokyo 100-0011 (JP)**
• **KURONUMA, Yota**
 **Tokyo 100-0011 (JP)**
• **MITAO, Shinji**
 **Tokyo 100-0011 (JP)**

(74) Representative: **Hoffmann Eitle**
**Patent- und Rechtsanwälte PartmbB**
**Arabellastraße 30**
**81925 München (DE)**

(56) References cited:
**JP-A- H02 284 777     JP-A- H03 229 819**
**JP-A- H03 285 016     JP-A- H04 314 826**
**JP-A- H05 245 658     JP-A- H05 261 567**
**JP-A- H06 256 905     JP-A- H07 246 481**
**JP-A- H07 305 112     US-A- 4 464 209**
**US-A- 4 736 884**

• **Japanese Industrial Standards Committee: "HOT-rolled stainless steel plate, sheet and strip JIS G 4304:2012" In: "HOT-rolled stainless steel plate, sheet and strip JIS G 4304:2012", 20 September 2012 (2012-09-20), Japanese Standards Association, Japanese Standards Association, XP055275223, pages 1-6, * page 4 ***

**Description**

TECHNICAL FIELD

The present invention relates to an austenitic stainless clad steel plate used for a line pipe and the like, and a method for producing thereof.

BACKGROUND ART

A clad steel plate is a highly-functional steel plate featuring both a mechanical characteristic of a base metal and a corrosion resistance of a cladding metal and further featuring excellent economic efficiency. An austenitic stainless clad steel plate is often used for a chemical tanker. However, as a growth of an energy development field, a demand of the austenitic stainless clad steel plate as an application to a pipe line has been expected. Recently, energy resources development has advanced also in a field referred to as a difficult-to-mine environment. Under such environment, a low temperature toughness of the base metal, especially brittle crack arrestability and the corrosion resistance of the cladding metal, has been requested more than ever.

The clad steel plate is a steel material that includes two different characteristic types of metals joined together, namely, stainless steel and an Ni alloy as the cladding metal and a low-alloy steel material as the base metal. Because the clad steel plate is a metallurgical joining of dissimilar metals, the clad steel plate is free from separation in contrast to platings and can attain new characteristics, which are impossible to achieve with single metal and alloy.

Selecting a cladding metal having a function satisfying a purpose of each usage environment for a clad steel plate enables the clad steel plate to have the identical level of function as a solid metal (having the metallic structure of the cladding metal throughout the thickness). Furthermore, it is possible to use a low-alloy steel having features suitable for a severe environment requiring high toughness and high strength other than the corrosion resistance, as the base metal of the clad steel plate.

Thus, the clad steel plate allows alloying element consumption for producing thereof less than a solid metal and can have the identical level of corrosion resistance performance as the solid metal. Additionally, the clad steel plate can have the strength and toughness equivalent to the low-alloy steel. Therefore, the clad steel plate has advantages in terms of both economic efficiency and functionality.

From the above, the clad steel plate using high-alloy cladding metal including an austenitic stainless steel plate is considered as highly beneficial functional steel. The need for the clad steel plate has recently been increased more and more in various industrial fields.

However, if the austenitic stainless steel plate which is the cladding metal is held in a temperature range such as 500 °C to 800 °C, a carbide such as $Cr_{23}C_6$ and intermetallics (a compound of iron and chrome) such as an σ phase generates in the austenitic stainless steel plate. This generation reduces the Cr concentration at the vicinity of precipitate, and a grain boundary corrosion and pitting corrosion are apt to occur. Usually, in the case of the solid metal, a solution treatment is performed after rolling to ensure dissolving the precipitate. However, in the case of the clad steel plate, if the clad steel plate heated and held at a high temperature where the precipitate dissolves, crystal grains of the low-alloy steel which is the base metal become coarse, causing a problem of considerably degrading the mechanical characteristic.

From these backgrounds, a following clad steel plate and a method for producing thereof have been disclosed.

Patent Literatures 1 and 2 disclose the clad steel plates and the methods for producing thereof that performing quenching and tempering treatments produces the clad steel plate to have strength and low temperature toughness of the base metal of the clad steel plates. However, as described above, holding the clad steel plates in the specific temperature range deteriorates the corrosion resistance. Therefore, to achieve high corrosion resistance, the quenching and tempering treatment may not be performed. The method for production with the quenching and tempering treatments has a limit to improve the low temperature toughness, especially the brittle crack arrestability. As means to improve the corrosion resistance of the cladding metal and the low temperature toughness of the base metal, an application of a thermo-mechanical control process (TMCP) is preferable.

Patent Literature 3 describes a clad steel plate made of a cladding metal made of stainless steel or nickel alloy, and a base material containing in mass% C: 0.02 to 0.06, Si: 0.5 or less, Mn: 1. 0 to 1.8, P: 0.03 or less, S: 0.005 or less, Nb: 0.08 to 0.15, Ti: 0.005 to 0.03, Al: 0.05 or less, N: 0.002 to 0.006, and optionally, one or more of Ni, Cu, Cr, Mo, and Ca, the remainder being iron and inevitable impurities. Patent Literature 3 discloses the following method for producing the clad steel plate with TMCP using the stainless steel or the nickel alloy as the cladding metal. The low-alloy steel that contains Nb in a range of 0.08 to 0.15 mass% is used as the base metal. The rolling reduction ratio at 1000 °C or lower is set to 3 or more and the rolling finishing temperature is set to 900 °C to 1000 °C. However, Patent Literature 3 does not mention a method for ensuring the corrosion resistance of the cladding metal.

Patent Literature 4 discloses the following method for producing the stainless clad steel with TMCP using a low-alloy steel as the base metal. The low-alloy steel selectively contains Cu of 1.5 mass% or less, Ni of 3.0 mass% or less, Cr of 0.3 mass% or less, Mo of 0.3 mass% or less, or the like. The low-alloy steel is heated to 1100 °C or higher. Thereafter, the controlled rolling is performed with the rolling reduction ratio 2.5 or more in the temperature range of 1000 °C or higher and the rolling reduction of 50% or more in the temperature range from 850 °C to a temperature of -20 °C from the $Ar_3$ point of the base metal. However, this technique also does not mention the method for ensuring the corrosion resistance of the cladding metal.

Patent Literature 1: Japanese Unexamined Patent Application Publication No. 2006-328460
Patent Literature 2: Japanese Unexamined Patent Application Publication No. 2004-149821
Patent Literature 3: Japanese Unexamined Patent Application Publication No. 5-261567
Patent Literature 4: Japanese Unexamined Patent Application Publication No. 5-245658

DISCLOSURE OF THE INVENTION

PROBLEMS TO BE SOLVED BY THE INVENTION

The present invention provides an austenitic stainless clad steel plate having excellent joinability between a cladding metal and a base metal in addition to excellent corrosion resistance, especially sensitization resistance characteristics, and a method for producing thereof.

SOLUTIONS TO THE PROBLEMS

A stainless cladding steel plate, which is different from a solid stainless steel and a solid low-alloy steel, is required to meet, at the same time, three properties of: ensuring corrosion resistance of a cladding metal, ensuring a mechanical characteristic of a base metal, and ensuring joinability as a composite material. However, when assuming the use of TMCP, the means is unclear for ensuring the corrosion resistance of the cladding metal among these properties. The inventors have carried out long and intensive research focusing on this point and have confirmed the following. If the austenite becomes an unrecrystallized structure, a grain boundary length becomes long and a defect in the grains, such as dislocations and twinning, is introduced, which promotes precipitation of carbide. This is likely to generate sensitization. Additionally, forming an austenite grain structure into a partially recrystallized structure or a recrystallized structure is less likely to cause the sensitization. Further, the inventors have also figured out that reducing a C content is effective for restraining a carbide precipitation.

The present invention has been completed based on the knowledge as mentioned above. The gist of the present invention is as follows. In particular, the above-stated problems are solved by the steel plate according to claim 1 and the method for manufacturing a steel plate according to claim 2.

EFFECTS OF THE INVENTION

According to the present invention, forming a grain structure of a cladding metal of an austenitic stainless clad steel plate into a partially recrystallized structure or a recrystallized structure allows obtaining an austenitic stainless clad steel plate having excellent sensitization resistance characteristics. This austenitic stainless clad steel plate has excellent joinability between a cladding metal and a base metal.

DESCRIPTION OF PREFERRED EMBODIMENTS

The following describes limited ranges of components in the present invention in detail. Hereinafter, recitation of "%" for each element indicates "mass%", unless otherwise stated.

1. Structure of Cladding Metal

As described above, the precipitation of carbide along the grain boundary generates the sensitization in the austenitic stainless steel plate. If the austenite becomes an unrecrystallized structure, a grain boundary length becomes long and a defect in the grains, such as dislocations and twinning, is introduced, which promotes precipitation of carbide. This is likely to generate sensitization. Additionally, forming an austenite grain structure into a partially recrystallized structure or a recrystallized structure is less likely to cause the sensitization. Lowering the C content in the chemical components of the cladding metal makes this effect more remarkable. After taking a micrograph of the cladding metal (L surface, one-quarter t position) on which etching in aqua regia had been performed, the area fraction of the recrystallized structure of the structure of the cladding metal was obtained. The case where the area fraction was 10% or more to less than 90% was determined as the partially recrystallized structure, and the case where the area fraction was 90% or more was determined as the recrystallized structure. The L surface and the one-quarter *t* position, which are described above, mean the one-quarter position of a thickness t of a plate from a plate surface in a plate thickness direction on a plane parallel to a rolling direction and a plate thickness direction.

2. Chemical Components of Cladding Metal

C: 0.020% or less

In production of the clad steel plate, C is an element precipitated as a carbide through thermal history during rolling, inhibiting the corrosion resistance. Therefore, containing a large amount of C should be avoided. Containing C exceeding 0.020% promotes the precipitation of the carbide, which deteriorates the corrosion resistance. Accordingly, the amount of C shall be 0.020% or less. The less amount of C is, the more preferable it is. The amount of C preferably shall be 0.015% or less.

Si: 1.00% or less

Si is a component effective for deoxidation during production. Containing Si of 0.1% or more provides the effect. However, containing Si exceeding 1.00% leaves Si as a non-metallic inclusion, which deteriorates the corrosion resistance and hot workability. Accordingly, the amount of Si shall be 1.00% or less. Preferably, the amount of Si shall be 0.1% or more to 0.75% or less.

Mn: 2.00% or less

Mn is a component also effective for the deoxidation during steelmaking. However, containing Mn exceeding 2.00% leaves a non-metallic inclusion, such as MnS, which deteriorates the corrosion resistance and hot workability. Accordingly, the amount of Mn shall be 2.00% or less. Preferably, the amount of Mn shall be 0.4% or more to 1.4% or less.

P: 0.045% or less

P is impurities and is an element that segregates to the grain boundary, deteriorating the corrosion resistance. Accordingly, the amount of P shall be 0.045% or less. Preferably, the amount of P shall be 0.030% or less.

S: 0.030% or less

Similar to P, S is an impurity element from which the non-metallic inclusion, such as MnS, is precipitated, which deteriorates the corrosion resistance. Accordingly, the amount of S shall be 0.030% or less. Preferably, the amount of S shall be 0.010% or less.

Ni: 12.00 to 15.00%

Ni is the major element of the austenitic stainless steel plate and is an element that improves the corrosion resistance. Adhesion of an oxide film formed by Cr which will be described later, increases; therefore, combined addition with Cr improves the corrosion resistance. However, Ni is an expensive element. Therefore, considering a balance between the corrosion resistance performance and the price, the amount of Ni shall be in a range of 12.00 to 15.00%.

Cr: 16.00 to 18.00%

Cr is an element that forms the oxide film, which features highly protective performance, on a surface of metal, improving the corrosion resistance, such as a pitting corrosion resistance and a grain boundary corrosion resistance. However, Cr is an expensive element. Therefore, considering a balance between the corrosion resistance performance and the price, the amount of Cr shall be in a range of 16.00 to 18.00%.

Mo: 2.00 to 3.00%

Mo improves the pitting corrosion resistance and the crevice corrosion resistance. The combined effect with Cr and Ni improves the corrosion resistance; however, Cr and Ni are expensive elements. Therefore, considering a balance between the additive amount of Cr and Ni and the price, the amount of Mo is shall be 2.00 to 3.00%.

The balance of the above-described components of the cladding metal is Fe and incidental impurities. The incidental impurities include Cu, B, Ca, N, O, and the like. Containing the respective elements in ranges of: Cu: 0.50% or less, B: 0.0010% or less, Ca: 0.0050% or less, N: 0.05% or less, and O: 0.0050% or less does not affect the corrosion resistance at all. Obviously, since containing any other incidental impurities does not affect the properties, the incidental impurities may be contained.

3. Base Metal

The materials of the base metal are selected according to application or the like. For an application to pipe lines for natural gas and the like, the following low-alloy steel is used as the base metal. The low-alloy steel contains, by mass%, C: 0.26% or less, Si: 0.05% or more to 0.75% or less, Mn: 1.65% or less, P: 0.030% or less, S: 0.030% or less, Nb: 0.100% or less, V: 0.100% or less, and Ti: 0.100% or less, the remainder being Fe and unavoidable impurities. Additionally, the following expression is satisfied.

$$Nb + V + Ti \leq 0.15\% \quad . . . \quad (1)$$

(where Nb, V, and Ti in the formula (1) are respective contents of the elements (by mass%))
The yield strength (YS) is 450 MPa or more. The tensile strength (TS) is 535 MPa or more. A percentage of ductile fracture of the low-alloy steel at -10 °C by a DWTT test is 85% or more. Accordingly, the base metal of the clad steel plate of the present invention allows obtaining a desired tensile strength and yield strength, also ensuring better low temperature toughness.
More preferably, the C content shall be 0.12 mass% or less. More preferably, the Si content shall be 0.50 mass% or less.

4. Production Method

The following describes the method for producing the austenitic stainless clad steel plate of the present invention. The raw materials of the cladding metal and the base metal of the clad steel plate of the present invention can be adjusted within the above-described composition ranges and can be smelted by a conventional procedure or the like. Stacking and assembling the cladding metals and the base metals produces an assembled member. Performing a clad rolling for the assembled member produces a clad steel plate.

Heating temperature: 1050 °C or higher to 1150 °C or lower

To sufficiently perform the solution treatment of the cladding metal during heating, the cladding metal is heated to 1050 °C or higher. If lower than 1050 °C, not only the cladding metal is insufficiently sulution-treated, but also the heated austenite grain diameter becomes small. This lowers the recrystallization temperature and the unrecrystallized structure is likely to occur. From the aspect of joinability of the clad steel plate, the heating temperature is preferable to be a high temperature. However, if the clad steel plate is heated to an excessively high temperature, $\delta$ ferrite is generated in the cladding metal, resulting in deterioration of the corrosion resistance. If the clad steel plate is heated to 1150 °C or higher, the grains of the base metal become coarse, causing deterioration of toughness. Therefore, from the aspects of the corrosion resistance, the low temperature toughness, and the joinability, the heating temperature shall be in a range of 1050 °C or higher to 1150 °C or lower.

Rolling reduction ratio at steel plate surface temperature of 1000 °C or higher: 1.5 or more

The joinability of the clad steel plate is ensured by rolling in a high-temperature range. The importance of the rolling in the high-temperature range is as follows. A difference of deformation resistance becomes small between the austenitic stainless steel which is the cladding metal and the low-alloy steel which is the base metal. Therefore, the rolling produces an ideal joined interface. Additionally, in the high-temperature range, interdiffusion of the elements is likely to proceed at the boundary between the cladding metal and the base metal. Here, the steel plate surface means the surface of the assembled member formed by stacking the base metals and the cladding metals.
Accordingly, at a phase of manufacturing an assembled slab for clad rolling, it is recommended to ensure high vacuum of $10^{-4}$ torr ($1.33 \times 10^{-2}$ Pa) or more of the degree of vacuum in the assembled slab and to set rolling reduction ratio at 1.5 or more with the assembled surface temperature 1000 °C or higher (the rolling reduction ratio = (plate thickness before rolling (mm)) ÷ (plate thickness after rolling (mm))), in order to achieve sufficient metal joining at the interface of the cladding metal and the base metal. To ensure the joinability, the rolling reduction ratio is preferably 2.0 or more.

It has been confirmed that applying a rolling of large rolling reduction in the austenite low-temperature region and water cooling immediately after the rolling are effective in order to improve the strength and the low temperature toughness of the base metal, especially the brittle crack arrestability. The following describes a controlled rolling and cooling conditions after the rolling. The temperatures in the rolling and cooling processes mean steel plate surface temperatures.

Controlled rolling: cumulative rolling reduction of 50% or more at 1000 °C or lower (preferable conditions)

Performing the rolling at the cumulative rolling reduction of 50% or more at 1000 °C or lower makes the recrystallized austenite grains small and the recrystallized austenite grains partially become the unrecrystallized structure, which results in the refining of bainite which generates after the transformation during the subsequent accelerated cooling, to improve the toughness. Accordingly, to ensure the strength and the low temperature toughness of the base metal, the cumulative rolling reduction by the controlled rolling at 1000 °C or lower shall be 50% or more.

Rolling finishing temperature: 850 °C or higher

An excessive low rolling finishing temperature is less likely to progress the diffusion of elements, resulting in deterioration of joinability. Additionally, the rolling at the temperature lower than 850 °C produces an unrecrystallized region. In addition, the rolling at the temperature lower than 850 °C possibly promotes the precipitation of the carbide and the phase σ in the cladding metal. Accordingly, a finish rolling is finished at a temperature of 850 °C or higher in order to ensure the corrosion resistance of and the joinability of the clad steel.

Cooling rate: 3 °C/s or more and cooling stop temperature: 550 °C or lower

After finishing the rolling, performing the accelerated cooling up to 550 °C or lower ensures keeping the strength and toughness of the base metal. If the cooling stop temperature exceeds 550 °C the toughness possibly deteriorates. The cooling rate also possibly affects the strength and toughness of the base metal. The cooling rate of less than 3 °C/s possibly deteriorates the toughness. The cooling rate also significantly affects the corrosion resistance. The cooling rate of less than 3 °C/s may result in precipitating the carbide and the σ phase in the cladding metal in the cooling process immediately after the rolling, possibly deteriorating the corrosion resistance. Accordingly, the cooling stop temperature shall be 550 °C or lower, and the cooling rate shall be 3 °C/s or more. More preferably, the cooling rate shall be 5 °C/s or more. After performing this accelerated cooling, natural cooling to the clad steel is carried out.

The base metal raw material and the cladding metal raw material of the clad steel plate of the present invention can be adjusted within the above-described composition ranges and can be smelted by the conventional procedure or the like. For the assembled slab for clad rolling, a type obtained by stacking the base metal/cladding metal/cladding metal/base metal is efficient for producing the clad steel plate. Additionally, considering a warping during cooling, the base metals and the cladding metals are desired to have identical thicknesses, respectively. Obviously, the method is not necessarily to be limited to the above-described assembly method. Working Example 1

The following describes working examples of the present invention. The mechanical characteristic of the base metal was measured as follows. Tensile test specimens and DWTT test specimens compliant to API-5L were sampled to conduct a tensile test and a Drop Weight Tear Test (a DWTT test). In the DWTT test, the test temperature was set to -10 °C.

The corrosion resistance test of the cladding metal was compliant to Method of ferric chloride tests for stainless steels according to JIS G0578: 2000. An immersion test was conducted at the test temperature of 50 °C. A cladding metal with a decreased amount of corrosion of less than 60 g/ ($m^2$•hr) was determined to have excellent corrosion resistance.

The joinability as the clad steel plate was tested compliant to the shear strength test described in the testing method of clad steel plate according to JIS G0601: 2012. As the evaluation criteria, a clad steel plate with the shear strength of 300 MPa or more was determined to have good joinability.

After taking a micrograph of the cladding metal (L surface, one-quarter *t* position) on which etching in aqua regia had been performed, the area fraction of the recrystallized structure of the structure of the cladding metal was obtained. The case where the area fraction was 10% or more to less than 90% was determined as the partially recrystallized structure, and the case where the area fraction was 90% or more was determined as the recrystallized structure.

Using the base metals whose chemical components are shown in Table 1 and the cladding metals whose chemical components are shown in Table 2, the clad steel plates were produced. The production conditions were as follows. The base metal/cladding metal/cladding metal/base metal were stacked to make one set of a clad steel. Hot rolling was performed under the conditions shown in Table 3. Specimens for the tensile test, the DWTT test, and the ferric chloride corrosion test were sampled from the clad steel plate and were provided for the respective tests. Table 4 shows the results. In Table 4, a Shear Area Transition Temperature (SATT) indicates a ductile fracture transition temperature.

[Table 2]

[Table 2]

| Steel No. | Chemical component (unit: mass%) | | | | | | | | Remarks |
|---|---|---|---|---|---|---|---|---|---|
| | C | Si | Mn | P | S | Ni | Cr | Mo | |
| C1 | 0.015 | 0.61 | 0.76 | 0.021 | 0.0006 | 12.21 | 17.68 | 2.15 | Example of present invention |
| C2 | 0.019 | 0.51 | 0.55 | 0.021 | 0.0007 | 13.45 | 17.85 | 2.89 | Example of present invention |
| C3 | 0.015 | 0.56 | 0.64 | 0.018 | 0.0005 | 14.41 | 16.31 | 2.55 | Example of present invention |
| D1 | 0.051 | 0.63 | 0.81 | 0.021 | 0.0007 | 12.35 | 17.31 | 2.08 | Comparative example |

[Table 3]

| Production method No. | Heating temperature (°C) | Rolling reduction ratio at 1000°C or higher | Cumulative rolling reduction at 1000°C or lower (%) | Rolling finishing temperature (°C) | Cooling rate (°C/sec) | Cooling stop temperature (°C) |
|---|---|---|---|---|---|---|
| E1 | 1100 | 2.0 | 50 | 900 | 5 | 500 |
| E2 | 1050 | 2.0 | 50 | 900 | 5 | 500 |
| E3 | 1150 | 2.0 | 50 | 900 | 5 | 500 |
| E4 | 1100 | 1.5 | 50 | 900 | 5 | 500 |
| E5 | 1100 | 2.0 | 65 | 900 | 5 | 500 |
| E6 | 1100 | 2.0 | 50 | 850 | 5 | 500 |
| E7 | 1100 | 2.0 | 50 | 900 | 5 | 550 |
| E8 | 1100 | 2.0 | 50 | 900 | 3 | 350 |
| E9 | 1100 | 2.0 | 50 | 950 | 5 | 500 |
| F1 | 1000 | 2.0 | 50 | 900 | 5 | 500 |
| F2 | 1100 | 1.3 | 50 | 900 | 5 | 500 |
| F3 | 1100 | 2.0 | 40 | 900 | 5 | 500 |
| F4 | 1100 | 2.0 | 50 | 800 | 5 | 500 |
| F5 | 1100 | 2.0 | 50 | 900 | 5 | 600 |
| F6 | 1100 | 2.0 | 50 | 900 | 0.5 (Left for cooling only) | - |

[Table 4]

| Working example No. | Base metal steel No. (Table 1) | Cladding metal steel No. (Table 2) | Production condition (Table 3) | Base metal tensile property | | Base metal drop weight test property | Shear stress (MPa) | Cladding metal crystal grain structure | Decreased amount of cladding metal through corrosion (g/(m². hr)) | Remarks |
|---|---|---|---|---|---|---|---|---|---|---|
| | | | | YS (MPa) | TS (MPa) | DWTT -10°C SATT (%) | | | | |
| 1 | A1 | C1 | E1 | 495 | 620 | 95 | 375 | Recrystalized | 35.2 | Example of present invention |
| 2 | A2 | C2 | E2 | 475 | 597 | 95 | 350 | Partially recrystalized | 45.6 | Example of present invention |
| 3 | A3 | C3 | E3 | 496 | 619 | 90 | 403 | Recrystalized | 34.8 | Example of present invention |
| 4 | A1 | C1 | E4 | 476 | 607 | 95 | 330 | Recrystalized | 36.2 | Example of present invention |
| 5 | A1 | C1 | E5 | 511 | 622 | 100 | 378 | Partially recrystalized | 44.1 | Example of present invention |
| 6 | A1 | C1 | E6 | 512 | 621 | 100 | 370 | Partially recrystalized | 42.5 | Example of present invention |
| 7 | A1 | C1 | E7 | 477 | 587 | 95 | 365 | Recrystalized | 37.9 | Example of present invention |
| 8 | A1 | C1 | E8 | 532 | 661 | 95 | 378 | Recrystalized | 38.7 | Example of present invention |
| 9 | A1 | C1 | E9 | 479 | 589 | 90 | 411 | Recrystalized | 33.5 | Example of present invention |

| Working example No. | Base metal steel No. (Table 1) | Cladding metal steel No. (Table 2) | Production condition (Table 3) | Base metal tensile property | | Base metal drop weight test property | Shear stress (MPa) | Cladding metal crystal grain structure | Decreased amount of cladding metal through corrosion (g/(m$^2$. hr)) | Remarks |
|---|---|---|---|---|---|---|---|---|---|---|
| | | | | YS (MPa) | TS (MPa) | DWTT -10°C SATT (%) | | | | |
| 10 | A1 | D1 | E1 | 501 | 615 | 90 | 383 | Recrystalized | 75.7 | Comparative example |
| 11 | A1 | D1 | F4 | 470 | 590 | 100 | 390 | Unrecrystalized | 66.7 | Comparative example |
| 12 | A1 | C1 | F1 | 503 | 624 | 95 | 165 | Unrecrystalized | 62.5 | Comparative example |
| 13 | A1 | C1 | F2 | 490 | 616 | 95 | 179 | Recrystalized | 35.3 | Comparative example |
| 14 | A1 | C1 | F3 | 457 | 587 | 50 | 325 | Partially recrystalized | 45.5 | Example of present invention |
| 15 | A1 | C1 | F4 | 518 | 632 | 95 | 278 | Unrecrystalized | 64.6 | Comparative example |
| 16 | A1 | C1 | F5 | 438 | 540 | 70 | 378 | Recrystalized | 53.1 | Example of present invention |
| 17 | A1 | C1 | F6 | 425 | 507 | 55 | 381 | Recrystalized | 51.3 | Example of present invention |

The steel plates of Working Examples Nos. 1 to 9, 14, 16, and 17 whose chemical components of the cladding metals and production conditions meeting the range of the present invention satisfy the corrosion resistance of the cladding metal and the joinability as the clad steel. Among them, in particular, the steel plates of Working Examples Nos. 1 to 9, which were produced under the production conditions E1 to E9, exhibited YS of 450 MPa or more and TS of 535 MPa or more in the tensile test, which indicates excellent base metal strength. The steel plates of these Working Examples Nos. 1 to 9 also exhibited the percentage of ductile fracture of 85% or more in the DWTT test, which indicates excellent in the low temperature toughness of the base metal.

Meanwhile, the following has been found. With the steel plates of Working Examples Nos. 10 to 13 and 15, which are Comparative Examples, the component of the cladding metal was outside the range of the present invention, the grain structure of the cladding metal was unrecrystallized, or the shear stress was less than 300 MPa. Thus, at least one of the sensitization resistance characteristics and the joinability were poor.

**Claims**

1. An austenitic stainless clad steel plate comprising:

   a cladding metal including:

      a composition that consists of, by mass%,

         C: 0.020% or less, Si: 1.00% or less,
         Mn: 2.00% or less, P: 0.045% or less,
         S: 0.030% or less, Ni: 12.00 to 15.00%,
         Cr: 16.00 to 18.00%, Mo: 2.00 to 3.00%,
         Cu: 0.50% or less, B: 0.0010% or less,
         Ca: 0.0050% or less, N: 0.05% or less,
         O: 0.0050% or less, and
         the balance being Fe and incidental impurities; and

      an austenite grain structure of a partially recrystallized structure or a recrystallized structure; and

   a base metal formed by being stacked to the cladding metal;
   wherein the austenitic stainless clad steel plate has a shear strength of 300 MPa or more, wherein a decreased amount of the cladding metal through corrosion based on JIS G0578 (2000) is less than 60 g/(m$^2$·h), wherein the base metal is a low-alloy steel having a composition that consists of, by mass%,
   C: 0.26% or less, Si: 0.05% or more to 0.75% or less,
   Mn: 1.65% or less, P: 0.030% or less,
   S: 0.030% or less, Nb: 0.100% or less,
   V: 0.100% or less, and Ti: 0.100% or less, the remainder being Fe and unavoidable impurities
   the composition satisfying following formula (1):

$$Nb + V + Ti \leq 0.15\% \ . \ . \ . \ (1),$$

   (where Nb, V, and Ti in the formula (1) are respective contents of elements (by mass%)),
   the base metal has a yield strength (YS) of 450 MPa or more,
   the base metal has a tensile strength (TS) of 535 MPa or more, and
   the base metal has a percentage of ductile fracture at -10 °C by a DWTT test of 85% or more.

2. A method for producing an austenitic stainless clad steel plate according to claim 1, comprising the steps of:

   heating an assembled member produced by stacking the base metal and the cladding metal, the respective alloy compositions of which are adjusted as prescribed in claim 1, to a temperature of 1050 °C to 1150 °C;
   subsequently, performing hot rolling with a rolling reduction ratio 1.5 or more at a steel plate surface temperature of 1000 °C or higher and with a rolling finishing temperature 850 °C or higher; and
   thereafter, immediately after the rolling, performing cooling to the assembled member, the cooling being an accelerated cooling at a cooling rate of 3 °C/s or more and a cooling stop temperature of 550 °C or lower;

```
(here, the rolling reduction ratio represents: (plate
thickness before rolling (mm)) ÷ (plate thickness after rolling
(mm))).
```

3.  The method according to claim 2, wherein
    a cumulative rolling reduction in a temperature range of 1000 °C or lower is set to 50% or more in the hot rolling.

**Patentansprüche**

1.  Austenitisches plattiertes Edelstahlblech, umfassend:

    ein Plattierungsmetall, enthaltend:

    eine Zusammensetzung, in Massen-% bestehend aus
    C: 0,020% oder weniger, Si: 1,00% oder weniger,
    Mn: 2,00% oder weniger, P: 0,045% oder weniger,
    S: 0,030% oder weniger, Ni: 12,00 bis 15,00%,
    Cr: 16,00 bis 18,00%, Mo: 2,00 bis 3,00%,
    Cu: 0,50% oder weniger, B: 0,0010% oder weniger,
    Ca: 0,0050% oder weniger, N: 0,05% oder weniger,
    O: 0,0050% oder weniger und

    wobei der Rest Fe und unvermeidbare Verunreinigungen sind; und
    eine Austenitkornstruktur einer teilweise rekristallisierten Struktur oder einer rekristallisierten Struktur; und
    ein Basismetall, das durch Schichten auf das Plattierungsmetall gebildet ist;
    worin das austenitische plattierte Edelstahlblech eine Scherfestigkeit von 300 MPa oder mehr aufweist, worin
    eine durch Korrosion verringerte Menge des Plattierungsmetalls basierend auf JIS G0578 (2000) weniger als
    60 g/(m$^2$·h) beträgt, worin das Basismetall ein niedriglegierter Stahl ist, der eine Zusammensetzung aufweist,
    in Massen-% bestehend aus
    C: 0,26% oder weniger, Si: 0,05% oder mehr bis 0,75% oder weniger,
    Mn: 1,65% oder weniger, P: 0,030% oder weniger,
    S: 0,030% oder weniger, Nb: 0,100% oder weniger,
    V: 0,100% oder weniger und Ti: 0,100% oder weniger, wobei der Rest Fe und unvermeidbare Verunreinigungen
    sind,
    wobei die Zusammensetzung die folgende Formel (1) erfüllt:

$$Nb + V + Ti \leq 0,15\% \quad . \quad . \quad . \quad (1),$$

    (wobei Nb, V und Ti in der Formel (1) die jeweiligen Gehalte der Elemente (in Massen-%) darstellen),
    das Basismetall eine Streckgrenze (YS - "yield strength") von 450 MPa oder mehr aufweist,
    das Basismetall eine Zugfestigkeit (TS - "tensile strength") von 535 MPa oder mehr aufweist und
    das Basismetall einen Anteil an Verformungsbruch bei -10 °C durch einen DWTT-Test von 85% oder mehr
    aufweist.

2.  Verfahren zur Herstellung eines austenitischen plattierten Edelstahlblechs gemäß Anspruch 1, umfassend die Schritte:

    Erwärmen eines zusammengesetzten Elements, das durch Stapeln des Basismetalls und des Plattierungsmetalls hergestellt ist, wobei die jeweiligen Legierungszusammensetzungen wie in Anspruch 1 angegeben eingestellt sind, auf eine Temperatur von 1050 °C bis 1150 °C;

anschließend Warmwalzen mit einem Walzreduktionsverhältnis von 1,5 oder mehr bei einer Stahlblechoberflächentemperatur von 1000 °C oder höher und mit einer Walzendtemperatur von 850 °C oder höher; und danach, unmittelbar nach dem Walzen, Abkühlen des zusammengesetzten Elements, wobei das Abkühlen ein beschleunigtes Abkühlen mit einer Abkühlgeschwindigkeit von 3 °C/s oder mehr und einer Abkühlstopptemperatur von 550 °C oder weniger ist;

```
(das Walzreduktionsverhältnis stellt hier dar:
(Plattendicke vor dem Walzen (mm))) ÷ (Plattendicke nach dem
Walzen (mm)).
```

3. Verfahren gemäß Anspruch 2, worin
eine kumulative Walzreduktion beim Warmwalzen in einem Temperaturbereich von 1000 °C oder niedriger auf 50% oder mehr eingestellt ist.

## Revendications

1. Plaque en acier à placage inoxydable austénitique comprenant :
un métal de placage incluant :

une composition qui consiste en, en % en masse,
C : 0,020 % ou moins, Si : 1,00 % ou moins, Mn : 2,00 % ou moins, P : 0,045 % ou moins, S : 0,030 % ou moins, Ni : 12,00 à 15,00 %, Cr : 16,00 à 18,00 %, Mo : 2,00 à 3,00 %, Cu : 0,50 % ou moins, B : 0,0010 % ou moins, Ca : 0,0050 % ou moins, N : 0,05 % ou moins, O : 0,0050 % ou moins, et
le reste étant Fe et des impuretés accidentelles ; et
une structure de grain d'austénite d'une structure partiellement recristallisée ou d'une structure recristallisée ; et
un métal de base formé en étant empilé sur le métal de placage ;
dans lequel la plaque en acier à placage inoxydable austénitique présente une résistance au cisaillement de 300 MPa ou plus, dans laquelle une diminution de la quantité du métal de placage par corrosion sur la base de la norme JIS G0578 (2000) est inférieure à 60 g/(m$^2$.h), dans laquelle le métal de base est un acier faiblement allié ayant une composition qui consiste en, en % en masse,
C : 0,26 % ou moins, Si : 0,05 % ou plus à 0,75 % ou moins, Mn : 1,65 % ou moins, P : 0,030 % ou moins, S : 0,030 % ou moins, Nb : 0,100 % ou moins, V : 0,100 % ou moins, et Ti : 0,100 % ou moins,
le reste étant Fe et des impuretés inévitables
la composition satisfaisant la formule (1) suivante :

$$Nb + V + Ti \leq 0,15\,\% \qquad (1)$$

(où Nb, V, et Ti dans la formule (1) sont les teneurs respectives des éléments (en % en masse)),
le métal de base présente une limite d'élasticité (YS) de 450 MPa ou plus,
le métal de base présente une résistance à la traction (TS) de 535 MPa ou plus, et
le métal de base présente un pourcentage de rupture ductile à -10 °C par un test DWTT de 85 % ou plus.

2. Procédé pour produire une plaque en acier à placage inoxydable austénitique selon la revendication 1, comprenant les étapes suivantes :

le chauffage d'un élément assemblé produit par l'empilement du métal de base et du métal de placage, dont les compositions d'alliage respectives sont ajustées comme indiqué dans la revendication 1, à une température de 1 050 °C à 1150 °C ;
ensuite, la mise en oeuvre d'un laminage à chaud avec un taux de réduction par laminage de 1,5 ou plus à une température de surface de plaque en acier de 1 000 °C ou plus et avec une température de finition de laminage de 850 °C ou plus ; et
ensuite, immédiatement après le laminage, la mise en oeuvre d'un refroidissement sur l'élément assemblé, le refroidissement étant un refroidissement accéléré à une vitesse de refroidissement de 3 °C/s ou plus et une température d'arrêt de refroidissement de 550 °C ou moins ;

(ici, le taux de réduction par laminage représente : (épaisseur de la plaque avant

laminage (mm)) ÷ (épaisseur de la plaque après laminage (mm)).

3. Procédé selon la revendication 2, dans lequel
une réduction cumulée par laminage dans une plage de températures de 1 000 °C ou moins est établie à 50 % ou plus dans le laminage à chaud.

**REFERENCES CITED IN THE DESCRIPTION**

**Patent documents cited in the description**

- JP 2006328460 A
- JP 2004149821 A
- JP 5261567 A
- JP 5245658 A